# FASCICULE DE BREVET EUROPEEN

(11) **EP 2 809 581 B1**
(45) Date de publication et mention de la délivrance du brevet: **23.01.2019**
(21) Numéro de dépôt: 13701794.3
(22) Date de dépôt: 31.01.2013
(51) Int. Cl.: B64G 1/40, F02K 9/60, F17C 13/00, F17C 3/04

(54) **PROCEDE DE REALISATION DE LA COUCHE EXTERNE D'UN RESERVOIR DE LANCEUR SPATIAL**
TANK FÜR EINE TRÄGERRAKETE UND VERFAHREN ZUM HERSTELLEN SEINER ÄUSSEREN SCHICHT
TANK FOR A LAUNCH VEHICLE AND METHOD OF FABRICATION OF ITS OUTER LAYER

(30) Priorité: 01.02.2012 FR 1250948
(43) Date de publication de la demande: 10.12.2014
(73) Titulaire: Cryospace l'Air Liquide Aérospatiale, 78130 Les Mureaux (FR)
(72) Inventeur: DAMAS, Alain, F-78180 Montigny Le Bretonneux (FR); MERCIER, Antoine, F-75018 Paris (FR); PEYRAUD, François, F-78440 Gargenville (FR)
(74) Mandataire: Brevalex
(86) Numéro de dépôt international: PCT/EP2013/051851
(87) Numéro de publication internationale: WO 2013/113784

(56) Documents cités:
- EP-A1- 1 878 663
- FR-A1- 2 903 758
- US-A- 3 392 864
- US-A- 3 540 615
- US-A1- 2005 001 100

## Description

### DOMAINE DE L'INVENTION

L'invention concerne le domaine des lanceurs spatiaux, en particulier des réservoirs cryogéniques susceptibles de contenir le carburant ou le comburant du système de propulsion du lanceur et leur fabrication. Ladite couche à obtenir est une couche de type sandwich aluminium/mousse/composite dont le ratio masse/raideur est optimisé pour améliorer la tenue au flambage, tout en réduisant les coûts de fabrication, pour améliorer l'isolation thermique de la structure de base du lanceur.

### ART ANTERIEUR ET PROBLEME POSE

Les réservoirs cryogéniques de lanceurs spatiaux contenant le carburant et le comburant sont généralement constitués d'une structure cylindrique en aluminium de grandes dimensions, typiquement de l'ordre de 5, 4 mètres de diamètre et de 20 mètres de long. Par contre, l'épaisseur des parois n'est que de quelques millimètres. Afin de limiter les échanges thermiques avec l'extérieur, les réservoirs sont recouverts d'une protection thermique d'une épaisseur de 20 à 25 mm sur la paroi extérieure. Cette protection thermique a donc pour fonction de maintenir les ergols cryogéniques sous forme liquide et de limiter les pertes par évaporation pendant le remplissage en zone de lancement. Durant le vol du lanceur, cette couche d'isolation limite à un niveau acceptable l'échauffement du comburant et du carburant acheminés vers le moteur. Elle est généralement constituée de panneaux de mousse rigide à cellules fermées, par exemple en polychlorure de vinyle. Un adhésif est déposé en ligne sur un support en tissu de verre juste avant d'être bobiné sur le réservoir. Les panneaux cintrés au rayon du réservoir sont ensuite déposés sur le tissu dans un délai maximal de quatre heures, puis collés par infusion à l'aide d'un sac entourant la totalité du réservoir et dans lequel on applique la consigne de dépression, jusqu'à obtenir la complète polymérisation de l'adhésif. Le sac à vide est enfin retiré. L'opération finale consiste à contrôler l'adhérence du joint de colle afin de détecter d'éventuels défauts nécessitant une réparation locale. Les joints entre les panneaux d'isolation sont également soigneusement contrôlés, une porosité dans le joint de colle pouvant entraîner ultérieurement un phénomène de cryopompage pendant la phase de mise en oeuvre du réservoir dans la chronologie de lancement. Toutefois, cette couche en mousse d'isolation ne participe pas à la tenue structurale du réservoir cryogénique.

Dans le cas du lanceur Ariane V, les réservoirs sous pression sont dimensionnés en contrainte. La structure est optimisée en épaisseur en configuration de virole lisse, conférant à l'assemblage métallique un très faible indice structural. Dans le cas des lanceurs linéaires, où les efforts de compression/flexion deviennent importants, on a recours habituellement à un épaississement ou à un raidissage de la structure métallique. Ces raidisseurs sont, par exemple, usinés dans l'épaisseur de la tôle. Ils sont généralement situés à l'extérieur de la structure métallique, mais cette configuration complique significativement l'opération ultérieure d'isolation du réservoir cryotechnique. La technologie habituellement utilisée, à savoir le collage de panneaux d'isolation cintrés aux rayons du réservoir, s'accommode mal des structures présentant des singularités extérieures telles que des raidisseurs, imposant d'aménager, préalablement à l'opération de collage, un réseau de rainurage à l'intrados de chaque panneau d'isolation, ajusté au pas des raidisseurs. On peut également avoir recours à des techniques de projection directe sur le substrat métallique, par exemple en mousse de polyuréthane, mais cette technique s'avère très compliquée à mettre en oeuvre pour des réservoirs de grandes dimensions, qui sont, de surcroît équipés de raidisseurs externes. Par exemple, des surépaisseurs apparaîtraient dans les zones de recouvrement entre la mousse adjacente solidifiée et déposée précédemment et la mousse en cours de dépôt. En outre, dans l'un et l'autre procédés alternatifs décrits précédemment, la performance des contrôles non destructifs du collage des panneaux d'isolation s'avère très dégradée par rapport au résultat obtenu avec le procédé classique de collage sous vide de panneaux sur un substrat lisse.

Afin de s'affranchir de cette contrainte de fabrication et de contrôle, on peut aussi envisager d'orienter les raidisseurs vers l'intérieur du réservoir. Mais, dans tous les cas de figures, l'ajout de raidisseurs conduit à l'alourdissement de la masse totale du réservoir et a donc un impact négatif sur la performance globale du lanceur. Par ailleurs, un changement de nuance d'aluminium n'offre pas le potentiel d'allégement requis, puisque le module de Young et le coefficient de Poisson, qui sont des paramètres influents pour la tenue du flambage, restent du même ordre de grandeur.

Le but de l'invention est de remédier à ces inconvénients en proposant un autre type de structure de parois pour le réservoir cryogénique d'un lanceur spatial.

D'autre part, il est connu de fabriquer des couches composites, de faible épaisseur, en utilisant un renfort constitué de fibres et d'infuser de la résine, à l'intérieur de celui-ci, afin de la polymériser. L'injection de la résine peut se faire grâce à un film de confinement placé autour du renfort. De plus, on fait le vide partiel autour de l'ensemble pour favoriser la répartition de la résine et sa polymérisation.

Enfin, les documents de brevet US 3 540 615 et US 3 392 864 divulguent un état de la technique relativement proche concernant le réservoir fabriqué par le procédé selon l'invention.

### RESUME DE L'INVENTION

A cet effet, un premier objet principal de l'invention est un procédé de réalisation d'une couche externe sur la surface externe d'un réservoir de lanceur spatial. Selon l'invention, ce procédé consiste à :
- plaquer contre la surface à recouvrir un renfort de faible densité, susceptible d'être imbibé de résine ;
- imbiber le renfort d'une résine au moyen d'un film de confinement placé autour du renfort, et
- polymériser ladite résine.

Il est préférable d'utiliser un sac à vide à placer autour de l'ensemble pour contribuer à la répartition homogène de la résine et à sa polymérisation, en faisant le vide à l'intérieur du sac à vide.

Dans une mise en oeuvre préférentielle du procédé, on utilise, comme renfort, un renfort constitué de plusieurs couches de fibres orientées de façon différente.

Il est avantageux de recouvrir au préalable la surface externe du renfort d'un film d'arrachage susceptible d'être arraché à la fin du procédé, permettant ainsi de pouvoir enlever à la fin du procédé tous les éléments constitutifs de la mise en oeuvre du procédé.

Dans la mise en oeuvre envisagée du procédé, le réservoir étant cylindrique, la pose de la couche renfort sur la surface à recouvrir s'effectue au moyen d'un rouleau dévideur d'une couche de renfort ayant un axe parallèle à l'axe de la structure cylindrique, animé d'un mouvement de rotation en combinaison avec un léger mouvement de translation longitudinal par rapport à la structure cylindrique pour obtenir un enroulement successif spirale de la couche de renfort sur la structure cylindrique.

### LISTE DES FIGURES

L'invention et ses différentes caractéristiques techniques seront mieux comprises à la lecture de la description suivante qui est illustrée de plusieurs figures représentant respectivement :
- figure 1, une maquette d'un réservoir cryogénique destinée à être recouvert d'une couche isolante et d'un renfort selon le procédé de l'invention ;
- figure 2, une réalisation préférentielle du renfort utilisé dans le procédé selon l'invention ; et
- figure 3, un schéma montrant le procédé selon l'invention.

### DESCRIPTION DETAILLEE DE L'INVENTION

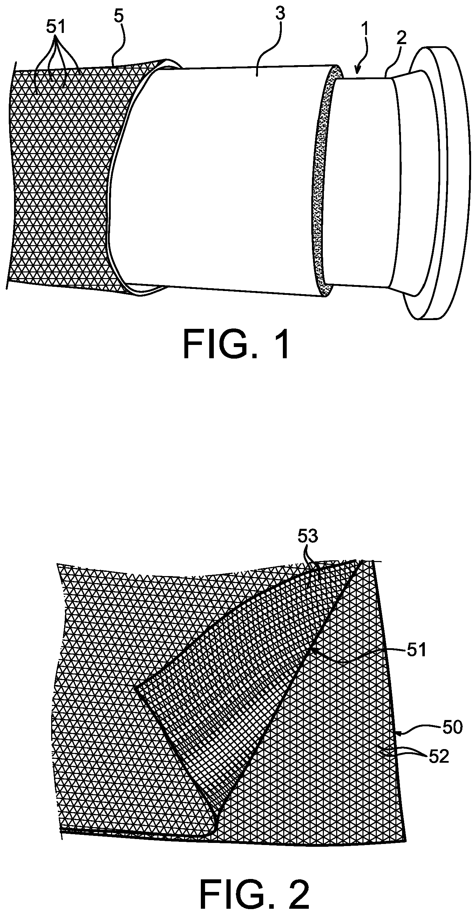

En référence à la figure 1 qui montre une maquette, un réservoir cryogénique du lanceur spatial est symbolisé par un tube 1 en aluminium. Sa paroi externe est recouverte d'une couche de mousse de protection thermique 3 de 2 à 3 cm d'épaisseur. Sur cette figure 1, l'ensemble est entouré d'une couche de renfort 5 constituée d'un tissu de réseau par exemple de fibres de verre amalgamées entre elles, sur quelques millimètres d'épaisseur. Toutefois, il faut que le renfort 5 soit de faible densité. Les fibres 51 sont ici représentées, en surface, placées dans le sens longitudinal par rapport à l'axe du tube 2. Dans son épaisseur, le renfort 5 peut contenir des fibres orientées différemment, par exemple perpendiculairement aux fibres longitudinales 51. Un tel renfort est destiné à être imbibé de résine pour constituer, après polymérisation de cette dernière, la couche renfort placée autour de la surface cylindrique à recouvrir.

En référence à la figure 2, pour améliorer la structure de ce renfort, ce dernier peut être constitué de plusieurs couches superposées 51 et 52. Chacune d'elles peut avoir des fibres respectives 52 et 53 orientées dans des directions différentes pour améliorer la structure intrinsèque mécanique d'un ensemble constitué de plusieurs couches superposées. Sur la figure 2, deux couches 50 et 51 ont été représentées décollées l'une de l'autre. On note que l'orientation des fibres 52 de la première couche 50 est la même que celle des fibres 53 de la deuxième couche 51. Ceci n'est qu'une réalisation possible car on envisage d'utiliser en superposition des couches de fibres orientées dans des directions différentes. Par exemple, on peut envisager trois couches successives avec des fibres de verre orientées dans des directions respectives de - 45°, 0° et + 45°.

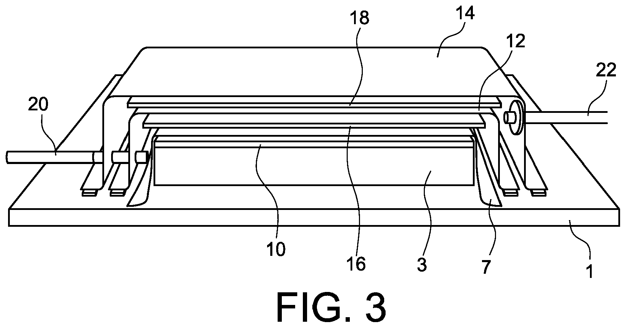

La figure 3 montre le procédé selon l'invention, c'est-à-dire le procédé de fabrication de la couche externe et la paroi d'une structure 1 sur laquelle elle est fabriquée et sur laquelle sont donc représentés empilés différents éléments.

Le premier élément constitutif de l'ensemble est la couche isolante 3 placée directement ou indirectement sur la surface externe de la paroi 1 de la structure à recouvrir. Cette couche de couche isolante 3 peut être constituée de polychlorure de vinyle d'une densité de l'ordre de 50 kg/m³.

Au-dessus se trouve la couche constituée d'un renfort 10 à imbiber de résine. Ce dernier est de faible densité, par exemple le SAERtex de la Société SAERTEX. Cette couche est relativement épaisse et est celle obtenue en utilisant les couches de fibres représentées à la figure 2.

Un film d'arrachage 7 est placé sur la surface externe de cette couche de renfort 10. Ce film d'arrachage 7 peut être réalisé sous la forme d'un film relativement fin, mais suffisamment résistant pour être arraché et enlevé, une fois le procédé terminé. Tous les éléments constitutifs de la mise en oeuvre du procédé et ne devant pas faire partie de la structure de l'ensemble une fois terminé sont donc retirés.

L'ensemble est surmonté d'un film 12 destiné à confiner la résine qui va être répartie dans toute l'épaisseur du renfort 10. En d'autres termes, la résine va être injectée sous le film de confinement 12.

Enfin, un sac à vide 14 est placé autour de l'ensemble pour pouvoir mettre en oeuvre le procédé. Le sac à vide 14 a pour fonction, en permettant de faire le vide partiel à l'intérieur, de favoriser la circulation de la résine dans toute la couche de renfort 10 et de favoriser la polymérisation de celle-ci une fois la résine mise en place.

Cet ensemble se complète d'une membrane de répartition de la résine 16, placée entre le film d'arrachage 7 et le film de confinement 12. Un tissu de drainage d'air 18 est placé entre le sac à vide 14 et le film de confinement 12.

L'introduction de la résine se fait par un conduit d'entrée 20 traversant le sac à vide 14 et le film de confinement 12 pour déboucher au niveau de la membrane de répartition de la résine 16. De manière à obtenir la répartition de la résine dans tout cet espace, le vide est fait au moyen d'un conduit de vide 22, qui débouche au niveau du tissu de drainage de l'air 18. Ainsi, le vide est fait dans le volume, en dessous du sac à vide 14.

Selon l'invention, le procédé permet de réaliser sur place, en un seul tenant, une peau composite externe sur une surface cylindrique, par exemple un réservoir cryogénique de lanceur spatial déjà isolé par une première couche isolante 3. En d'autres termes, la constitution d'un assemblage aluminium/mousse isolante/renfort composite concrétise la dernière étape d'un processus de réalisation de la structure d'un lanceur spatial selon l'invention. Le fait que la paroi en aluminium du lanceur soit recouverte d'une couche isolante 3, la mise en oeuvre de la couche renfort peut être différée, afin de permettre le contrôle non destructif du produit déjà réalisé, par exemple un collage de la couche isolante 3. La surface extérieure de l'assemblage est formée en une seule étape globale par diffusion puis réticulation de la résine à travers la couche renfort 10 constituée d'un réseau de fibres.

La polymérisation sous vide de la résine dans la couche renfort 10 et des différents collages permet de ne pas prendre le risque d'un tassement de la couche de mousse isolante 3, cette dernière conservant, après l'infusion de la résine, ses propriétés thermiques initiales.

Le procédé selon l'invention permet de bien maîtriser l'épaisseur du composite obtenu et de son rapport fibres/résine par un tassement continu tout au long du processus. Cet aspect permet d'accroître la qualité du composite, sans avoir recours au principe de l'autoclave qu'il n'est pas possible de mettre en oeuvre dans le cas de réservoirs cryogéniques de grandes dimensions.

La couche de renfort 10 est donc composée d'un renfort déposé sur la surface externe du réservoir isolé. La pose du renfort s'effectue par la translation, parallèlement à l'axe longitudinal du réservoir, d'un chariot supportant un rouleau dévideur équipé d'une bobine de renfort. La combinaison du mouvement de rotation du réservoir et du mouvement de translation du chariot dévidoir permet l'enroulement du tissu de renfort suivant une trajectoire hélicoïdale, avec un angle d'hélice déterminé. Le renfort peut être recouvert d'un très léger film de résine afin de permettre la bonne tenue des fibres lors de l'enroulement et leur maintien en place, c'est-à-dire sur la surface externe de la couche d'isolation 3. Une fois le renfort entièrement bobiné sur la structure recouverte de mousse isolante, il est procédé à l'infusion de la résine au travers du renfort. Cette étape est réalisée par l'empilement préalable des différentes couches constituant le renfort 10 telles que représentées à la figure 2. Le renfort 10 est déposé, par des roulements/enroulements autour de la structure du réservoir. Il peut être complété du tissu de drainage de l'air 18.

Une fois l'empilement des différentes membranes réalisé, le sac à vide 14 est placé autour de l'ensemble, il peut être celui utilisé pour le collage de la mousse isolante 3 sur la structure nue des réservoirs. Après, ce sac à vide 14 est utilisé pour créer la dépression qui est de l'ordre de 1 bar. La résine est alors injectée dans le sac en une multitude de points répartis sur la surface du réservoir. La résine infuse dans le tissu de drainage, puis dans le renfort et vient ainsi combler tous les espaces libres entre les fibres du renfort.

Enfin, la polymérisation de la résine est réalisée sous vide, au moyen du sac à vide 14 entourant l'ensemble, à température ambiante ou à l'aide d'un chauffage léger.

Le déroulement du procédé en une seule étape globale est compatible avec les dimensions de l'ensemble de la structure, sous réserve de s'affranchir d'une étape éventuelle de chauffage de la résine, autorisée par le choix d'une référence de résine dont la viscosité et les paramètres de polymérisation à température ambiante sont compatibles avec l'imprégnation du renfort 10.

L'infusion dans le sens transversal par rapport à l'axe longitudinal du réservoir présente un double avantage. Le premier est un gain de cycle car la résine parcourt une distance très faible par rapport au procédé d'injection classique, le composite représentant lui-même un rapport de section sur volume très faible. Le second avantage se définit en termes de qualité de l'infusion puisque les faibles distances de parcours impliquent une meilleure dissociation temporelle des phases d'infusion et de réticulation de la résine.

L'invention apporte, d'autre part, une fonction structurale à la peau externe de la structure sandwich obtenue autorisant la reprise directe d'interface mécanique. Cet avantage est considérable, dans le cas des réservoirs cryogéniques, car on évite ainsi d'avoir à retirer la mousse isolante pour accéder à la peau métallique du réservoir et de devoir utiliser des cales thermiques pour le découplage. Le risque de cryopompage de l'air pouvant survenir sur des réservoirs d'hydrogène liquide est ainsi éliminé par conception.

Le procédé ainsi décrit peut être appliqué à n'importe quel assemblage cylindrique, de préférence constitué d'une structure aluminium/mousse telle que les lignes d'avitaillement et de vidange cryogénique du lanceur, conférant à l'assemblage des caractéristiques supérieures à celles de chaque matériau pris séparément.

Les avantages mécaniques obtenus grâce au procédé selon l'invention permettent d'envisager la réduction de l'épaisseur de la peau interne en aluminium des réservoirs.

Les avantages mécaniques apportés par le procédé selon l'invention sont relatifs, entre autres, à la tenue au flambage dans le cas des réservoirs cryogéniques des lanceurs spatiaux linéaires. L'application du procédé peut donner lieu à plusieurs configurations d'assemblage. En effet, on peut envisager l'adjonction d'une peau d'aluminium en externe de la mousse isolante avant d'y placer la couche renfort.

Pour résumer, les avantages du procédé selon l'invention sont nombreux. On peut citer entre autres :
- la légèreté, c'est-à-dire le rapport masse/raideur de l'ensemble ;
- la tenue mécanique, en particulier au flambage, la structure étant moins sensible au défaut géométrique, et
- la couche composite ainsi obtenue a un rôle structural. Elle n'a pas de fonction thermique. Sa principale fonction est la tenue au flambage, mais elle permet également des fonctionnalités en surface du réservoir isolé, par exemple l'aménagement d'accrochages mécaniques ou la métallisation de surface. L'avantage thermique est indirect, le composite permet d'envisager, suivant le cas de charge, une réduction d'épaisseur de la paroi métallique et ainsi de la quantité de métal à mettre en froid lors de la mise en oeuvre du lanceur avant le décollage.

## Revendications

1. Procédé de réalisation d'une couche externe sur la surface externe d'un réservoir de lanceur spatial recouverte d'une couche isolante, consistant
- plaquer contre la surface à recouvrir un renfort (10) de densité permettant à celui-ci d'être imbibé de résine ;
- imbiber le renfort (10) d'une résine au moyen d'un film de confinement (12) placé autour du renfort (10), et
- polymériser ladite résine.

2. Procédé selon la revendication 1, **caractérisé en ce qu'**il consiste à utiliser un sac à vide (14) placé autour de l'ensemble pour contribuer à la répartition homogène de la résine et à sa polymérisation, en faisant le vide à l'intérieur du sac à vide (14).

3. Procédé selon la revendication 1, **caractérisé en ce qu'**il consiste à utiliser comme renfort (10) un renfort constitué de plusieurs couches (50, 51) de fibres (52, 53) orientées de façon différente.

4. Procédé selon la revendication 1, **caractérisé en ce qu'**il consiste à recouvrir au préalable la surface à recouvrir d'un film d'arrachage (7) susceptible d'être arraché à la fin du procédé, permettant ainsi de pouvoir enlever à la fin du procédé tous les éléments constitutifs de la mise en oeuvre du procédé.

5. Procédé selon la revendication 1, le réservoir étant cylindrique, **caractérisé en ce que** la pose de la couche de renfort (10) sur la surface à recouvrir s'effectue au moyen d'un rouleau dévideur de couche de renfort d'axe parallèle à l'axe de la structure cylindrique, animé d'un mouvement de rotation, en combinaison avec un léger mouvement de translation longitudinal par rapport à la structure cylindrique pour obtenir un enroulement successif en spirale de la couche de renfort (10) sur la structure cylindrique.

## Patentansprüche

1. Verfahren zur Herstellung einer Außenschicht auf der Außenfläche eines Tanks einer Trägerrakete, die mit einer Isolationsschicht bedeckt ist, das Folgendes umfasst:
Aufbringen einer Verstärkung (10) mit einer Dichte, die gestattet, dass sie mit Harz getränkt wird, auf die zu bedeckende Fläche;
Tränken der Verstärkung (10) mit einem Harz mittels eines um die Verstärkung (10) herum platzierten Umhüllungsfilms (12); und
Polymerisieren des Harzes.

2. Verfahren nach Anspruch 1, **dadurch gekennzeichnet, dass** es die Verwendung eines Vakuumsacks (14) umfasst, der um die Anordnung herum platziert wird, um zur homogenen Verteilung des Harzes und zu seiner Polymerisation beizutragen, wobei das Vakuum im Inneren des Vakuumsacks (14) hergestellt wird.

3. Verfahren nach Anspruch 1, **dadurch gekennzeichnet, dass** es die Verwendung einer aus mehreren Schichten (50, 51) von Fasern (52, 53), die unterschiedlich ausgerichtet sind, bestehenden Verstärkung als die Verstärkung (10) umfasst.

4. Verfahren nach Anspruch 1, **dadurch gekennzeichnet, dass** es die Bedeckung der zu bedeckenden Fläche mit einem Abreißfilm (7) im Voraus umfasst, der am Ende des Verfahrens abgerissen werden kann, wodurch gestattet wird, dass am Ende des Verfahrens alle für die Durchführung des Verfahrens grundlegenden Elemente entfernt werden können.

5. Verfahren nach Anspruch 1, wobei der Tank zylinderförmig ist, **dadurch gekennzeichnet, dass** das Aufbringen der Verstärkungsschicht auf die zu bedeckende Fläche mittels einer durch eine Drehbewegung bewegten Verstärkungsschicht-Abwickelrolle mit einer zur Achse der zylindrischen Struktur parallelen Achse in Kombination mit einer leichten translatorischen Längsbewegung relativ zu der zylindrischen Struktur durchgeführt wird, um eine aufeinanderfolgende Spiralwicklung der Verstärkungsschicht auf der zylindrischen Struktur zu erlangen.

## Claims

1. Method for creating an outer layer on the outer surface of a tank of a space launcher, coated with an insulating layer, which involves:
- pressing, against the surface to be coated, a density reinforcement (10) allowing said reinforcement to be imbibed with resin;
- imbibing the reinforcement (10) with a resin via a confinement film (12) placed around the reinforcement (10), and
- polymerising said resin.

2. Method according to claim 1, **characterised in that** it involves using a vacuum bag (14) placed around the assembly in order to contribute to the homogenous distribution of the resin and to its polymerisation, by creating a vacuum inside the vacuum bag (14).

3. Method according to claim 1, **characterised in that** it involves using, as the reinforcement (10), a reinforcement consisting of a plurality of layers (50, 51) of fibres (52, 53) oriented differently.

4. Method according to claim 1, **characterised in that** it involves previously coating the surface to be coated with a release film (7) capable of being removed at the end of the method, thus allowing all the component elements of the implementation of the method to be removed at the end of the method.

5. Method according to claim 1, the tank being cylindrical, **characterised in that** the placement of the reinforcement layer (10) on the surface to be coated is carried out via a roller that dispenses reinforcement layer, having an axis parallel to the axis of the cylindrical structure, imparted with a movement of rotation, in combination with a slight movement of longitudinal translation with respect to the cylindrical structure in order to obtain a successive winding, in a spiral, of the reinforcement layer (10) onto the cylindrical structure.
